Europäisches Patentamt

European Patent Office

Office européen des brevets

(19)

(11) Publication number: **0 198 833**
**B1**

# (12) EUROPEAN PATENT SPECIFICATION

(45) Date of publication of patent specification: **08.03.89**

(51) Int. Cl.⁴: **F 16 F 1/28, B 60 G 11/12**

(21) Application number: **85900474.9**

(22) Date of filing: **14.12.84**

(86) International application number:
**PCT/GB84/00430**

(87) International publication number:
**WO 85/02891 04.07.85 Gazette 85/15**

(94) Consolidated with 84308729.7/0146358
(European application No./publication No.) by
decision dated 15.05.87.

(54) SPRINGS OF COMPOSITE MATERIAL.

(30) Priority: **20.12.83 GB 8333846**
**11.08.84 GB 8420460**

(43) Date of publication of application:
**29.10.86 Bulletin 86/44**

(45) Publication of the grant of the patent:
**08.03.89 Bulletin 89/10**

(84) Designated Contracting States:
**AT BE CH DE FR GB IT LI LU NL SE**

(56) References cited:
**EP-A-0 005 916**
**Patent Abstracts of Japan, vol. 3, no. 105
(M71), 5 September 1979**
**Patent Abstracts of Japan, vol. 3, no. 101
(M707), 23 August 1979**
**Patent Abstracts of Japan, vol. 6, no. 29
(M113)(907), 20 February 1982**

(73) Proprietor: **GKN TECHNOLOGY LIMITED**
**Birmingham New Road**
**Wolverhampton West Midlands WV4 6BW (GB)**

(72) Inventor: **REYNOLDS, David George**
**3 Ermington Road Park Hall**
**Wolverhampton West Midlands WV4 5DZ (GB)**
Inventor: **DONOWSKI, Steven**
**13 Goodrest Avenue Halesowen**
**West Midlands B62 0HP (GB)**

(74) Representative: **Dodd, Graham Marshall et al**
**Guest Keen and Nettlefolds plc Group Patents
and Licensing Department P.O. Box 55 Ipsley
House Ipsley Church Lane**
**Redditch Worcestershire B98 0TL (GB)**

Note: Within nine months from the publication of the mention of the grant of the European patent, any person may
give notice to the European Patent Office of opposition to the European patent granted. Notice of opposition shall
be filed in a written reasoned statement. It shall not be deemed to have been filed until the opposition fee has been
paid. (Art. 99(1) European patent convention).

Courier Press, Leamington Spa, England.

## Description

This invention relates to leaf springs made of composite, fibre reinforced resin, material. More particularly, the invention relates to the provision of means whereby such a spring may be secured to, for example, a motor vehicle, where it is to be used.

The use of composite material to manufacture leaf springs enable a considerable saving in weight to be achieved as compared with conventional steel leaf springs. The composite material may comprise glass fibres set within a matrix of a cured resin, for example an epoxy resin, and by the selection of suitable fibres, and orientation and disposition thereof within the spring, a spring can be manufactured which is considerably lighter than a steel leaf spring having the same properties. This is particularly advantageous for use in motor vehicles. However, one aspect of the design of leaf springs of composite material which causes some difficulty is at the ends of the spring where it is required to be attached to the vehicle. Manufacturing processes used with composite materials do not readily permit an eye to be formed at the spring end, as can easily be done in the case of a steel spring.

It has been proposed, in EP-A-0070122, that an end fitting for a leaf spring made of composite material may comprise an attachment member lying within a recess extending transversely of an end portion of the spring, with a metal clamping member extending around the attachment member and the end portion of the spring, longitudinally of the spring. The clamping member is held to the spring adjacent the end portion thereof so that the attachment member, which preferably is a tubular bush, is firmly held in the recess of the spring. The clamping member is of sheet metal, and various means for holding it to the spring have been proposed. This design performs satisfactorily, but can entail the use of a large number of separate components, with consequent expense, and difficulty in manufacture.

JP-A-54 79 343 discloses a leaf spring made of fibre reinforced resin with mounting members bonded to it at its ends, the bonded surface portions being shaped to increase their area of contact and to assist in transmission of forces.

It is the object of the present invention to provide an improved means by which a leaf spring of composite material may be mounted, at its end, in apparatus or equipment, e.g. a motor vehicle, where it is to be used.

The present invention provides a leaf spring of composite, fibre reinforced resin, material including an end portion defining an open recess extending transversely of the spring, and an attachment member lying in said recess, characterised in that said end portion and attachment member are at least partially enclosed by a plastics material which has been moulded around said end portion and attachment member in situ, to secure the attachment member and spring together.

The moulded plastics material may be, for example, a polyurethane, an epoxy resin, or a material such as an appropriate grade of nylon. The material may itself incorporate fibre, e.g. glass fibre, reinforcement. Such materials can be injection moulded into a suitable die in which the end portion of the spring and the attachment member are placed. A process such as reaction injection moulding (RIM) may be utilised.

The attachment member may comprise a metal-rubber-metal bush, for receiving a bolt by which the spring is attached to a shackle or the like, or may comprise a tubular bush into which such a metal-rubber-metal bush can be fitted.

Keying formations may be provided, into which the covering material can flow in its moulding process to enhance security of the attachment member.

Advantages arising from use of the invention are that the spring and attachment member are held together without the use of clamps, bolts penetrating the spring, or like components. A rigid assembly is produced, and manufacturing tolerances are automatically taken up by the moulding process. With choice of suitable materials, the attachment member is protected against corrosion without requiring subsequent coating processes, and the assembly provides a damping effect against noise transmission.

The invention also provides a method, as above described, of providing a composite leaf spring with means for securing it to another component.

The invention will now be described by way of example with reference to the accompanying drawings, of which:

Figure 1 is a plan view of an end of a spring, according to the invention;

Figure 2 is a side view of the spring of Figure 1;

Figure 3 is a plan view of a further embodiment of the invention, showing diagrammatically manufacture thereof;

Figure 4 is a side view of the spring of Figure 3.

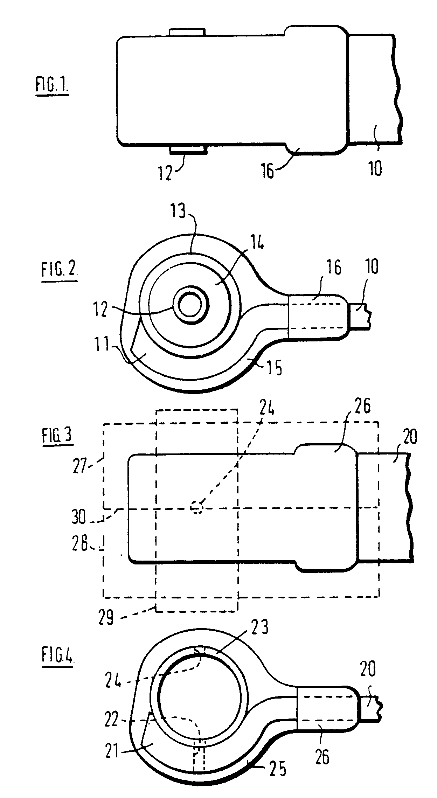

Referring firstly to Figures 1 and 2 of the drawings, there is illustrated a leaf spring 10 made of composite material such as glass fibres set in an epoxy resin. An end portion 11 of the spring defines a part circular recess extending transversely across the spring. Lying in the recess is an attachment member in the form of a bush with inner and outer tubular metal elements 12, 13 respectively and an intermediate annular rubber element 14. Such bushes are well known.

The bush is secured to the spring by a covering 15 of plastics material, which has been moulded in situ around the bush and spring end portion. A part 16 of the covering extends a short distance around the spring adjacent its end portion. The covering material is one which is capable of being moulded around the spring end portion and bush while in flowable form, and which subsequently solidifies either by a chemical reaction or temperature change to secure the bush and spring together. Suitable materials for this purpose have been referred to above, e.g. plastics materials such as polyurethanes, epoxy resins, or an appropriate grade of nylon, possibly glass fibre filled.

The assembly of bush and spring would be manufactured by placing these two components in a suitable mould or die set, into which the covering material can be introduced. The material could be injection moulded, or possibly poured in under gravity. A process such as reaction injection moulding could be used. Whichever technique is used, the mould or die must provide for prevention of the covering material penetrating the interior of the tubular element 12 of the bush, or preventing the inner and outer tubular elements 12, 13 of the bush from undergoing the slight relative movement which enables the bush to fulfill its damping function.

Referring now to Figures 3 and 4 of the drawings, these show the end portion of a leaf spring 20 of composite, fibre enforced plastics, material. A part circular transverse recess is defined by the end portion 21 of the spring, and in this end portion lies an attachment member in the form of a tubular bush 23. The bush is secured to the spring by a covering 25 of a plastics material as above, moulded around the bush and end portion of the spring. A part 26 of the covering material extends around a short part of the spring 20 adjacent its end portion 21.

In this embodiment, the bush 23 is provided with keying formations such as diametrically opposed apertures as 24, into which the covering material flows during its moulding process, so as to enhance the security of attachment of the bush to the spring. Such apertures may be provided in the bush by drilling it, possibly in place in the recess in the spring end portion whereupon an aperture 22 may be provided in the spring end portion itself to provide an even more secure keying effect.

The method of thus securing the attachment member to the spring is shown diagrammatically in Figure 3. Two halves of a die set are shown in outline at 27, 28, fitting together from the sides of the spring and joining at a plane 30. To prevent penetration of the covering material to the inside of the bush 23, a mandrel 29 is a close fit therein, and in the die parts to prevent leakage of the material during moulding. A seal would be provided where the spring adjacent its end portion emerges from the die parts. One or more places for entry of the covering material to the interior of the die parts would, of course, be provided, positioned as required and as well known to those skilled in the art, to ensure satisfactory material flow during the moulding process.

After the covering material has set, either by change in temperature or by a chemical reaction, the die halves can be parted, the spring end removed therefrom, and the mandrel 29 withdrawn from the bush 23. If required, a rubber and metal bush can then be pressed into the bush 23. The rubber-metal bush is replaceable by pressing out of the bush 23, if required.

It will, of course, be appreciated that more apertures for keying could be provided in the bush and/or spring end portion, to provide a greater keying effect. Alternatively, or in addition, the external surface of the bush could be knurled or otherwise configured to provide a keying effect, and the end portion of the spring could deliberately be provided with a rough surface with which the covering material can key.

## Claims

1. A leaf spring of composite, fibre reinforced resin, material including an end portion (11, 21) defining an open recess extending transversely of the spring, and an attachment member (13, 23) lying in said recess, characterised in that said end portion (11, 21) and attachment member (13, 23) are at least partially enclosed by a plastics material (15, 25) which has been moulded around said end portion and attachment member in situ, to secure the attachment member and spring together.

2. A spring according to Claim 1 further characterised in that said attachment member is a bush (12, 13, 14; 23) defining an aperture extending transversely of the spring.

3. A spring according to Claim 1 or Claim 2 further characterised in that said plastics material further encloses (at 16, 26) a part of the spring (10) adjacent said end portion thereof.

4. A spring according to any one of the preceding claims further characterised in that said material is injection moulded around said attachment member and spring end portion.

5. A spring according to any one of the preceding claims further characterised in that said material has keying engagement with said attachment member and/or said spring end portion.

6. A method of providing a leaf spring of composite, fibre reinforced resin, material, with means for securing it to another component, comprising forming an end portion (11, 21) of the spring to define a recess extending transversely of the spring, placing an attachment member (13, 23) to lie in said recess, placing said spring end portion having said attachment member in a mould, introducing a plastics material in flowable form into said mould at least partially to enclose said end portion and attachment member, and causing said material to set, to secure said attachment member to said spring end portion and permit removal from said mould.

## Patentansprüche

1. Blattfeder aus einem Verbundwerkstoff aus faserverstärktem Harz einschließlich eines Endabschnitts (11, 21), der eine quer zu der Feder sich erstreckende Ausnehmung definiert, und eines in dieser Ausnehmung angeordneten Befestigungskörpers (13, 23), dadurch gekennzeichnet, daß der Endabschnitt (11, 21) und der Befestigungskörper (13, 23) wenigstens teilweise von einem Plastikmaterial (15, 25) umgeben sind, das in situ um den Endabschnitt und den Befestigungskörper herum geformt wurde, um den Befestigungskörper und die Feder aneinander zu befestigen.

2. Feder nach Anspruch 1, dadurch gekennzeichnet, daß es sich bei dem Befestigungskörper um eine Büchse (12, 13, 14, 23) handelt, die eine sich quer zu der Feder erstreckende Öffnung definiert.

3. Feder nach Anspruch 1 oder 2, dadurch gekennzeichnet, daß das genannte Plastikmaterial weiterhin — bei 16, 26 — einen an den Endabschnitt sich anschließenden Teil der Feder (10) umschließt.

4. Feder nach einem der vorhergehenden Ansprüche, dadurch gekennzeichnet, daß das genannte Material um den Befestigungskörper und den Endabschnitt der Feder spritzgegossen ist.

5. Feder nach einem der vorhergehenden Ansprüche, dadurch gekennzeichnet, daß das genannte Material mit dem Befestigungskörper und-oder dem Endabschnitt der Feder eine formschlüssige Verbindung eingeht.

6. Verfahren zur Herstellung einer Blattfeder aus einem Verbundwerkstoff aus faserverstärktem Harz, mit Mitteln für deren Befestigung an einem anderen Bauteil, wobei dàs Verfahren darin besteht, daß ein Federendabschnitt (11, 21) so geformt wird, daß er eine quer zu der Feder sich erstreckende Ausnehmung definiert, daß ein Befestigungskörper (13, 23) in der Ausnehmung angeordnet wird, daß der Federendabschnitt mit dem Befestigungskörper in eine Form gelegt wird und ein Plastikmaterial in flüssigem Zustand in die Form eingeführt wird, um den Endabschnitt und den Befestigungskörper wenigstens teilweise zu umschließen, und daß das genannte Material zum Härten veranlaßt wird, um den Befestigungskörper an dem Federendabschnitt zu befestigen und ein Entfernen aus der Form zu ermöglichen.

**Revendications**

1. Ressort à lame d'un matériau composite à base d'une résine armée de fibres, comprenant une partie d'extrémité (11, 21) délimitant une cavité ouverte disposée transversalement au ressort, et un organe de fixation (13, 23) disposé dans la cavité, caractérisé en ce que la partie d'extrémité (11, 21) et l'organe de fixation (13, 23) sont entourés au moins partiellement de matière plastique (15, 25) qui a été moulée autour de la partie d'extrémité et de l'organe de fixation in situ afin que l'organe de fixation et le ressort soient fixés l'un à l'autre.

2. Ressort selon la revendication 1, caractérisé en outre en ce que l'organe de fixation est un manchon (12, 13, 14; 23) délimitant une ouverture disposée transversalement dans le ressort.

3. Ressort selon l'une des revendications 1 et 2, caractérisé en outre en ce que la matière plastique entoure aussi (en 16, 26) une partie du ressort (10) qui est adjacente à sa partie d'extrémité.

4. Ressort selon l'une quelconque des revendications précédentes, caractérisé en outre en ce que la matière est moulée par injection autour de l'organe de fixation et de la partie d'extrémité du ressort.

5. Ressort selon l'une quelconque des revendications précédentes, caractérisé en outre en ce que la matière coopère par clavetage avec l'organe de fixation et/ou la partie d'extrémité du ressort.

6. Procédé de fabrication d'un ressort à lame formé d'un matériau composite à base d'une résine armée de fibres, ayant un dispositif de fixation du ressort sur un autre élément, comprenant la formation d'une partie d'extrémité (11, 21) du ressort afin qu'elle délimite une cavité placée transversalement dans le ressort, la disposition d'un organe de fixation (13, 23) afin qu'il soit disposé dans la cavité, la disposition de la partie d'extrémité du ressort, ayant l'organe de fixation, dans un moule, l'introduction de matière plastique sous forme fluide dans le moule qui entoure au moins partiellement la partie d'extrémité et l'organe de fixation, et le durcissement de la matière afin que l'organe de fixation soit maintenu sur la partie d'extrémité du ressort et pour que l'ensemble puisse être retiré du moule.

FIG.1.

FIG.2.

FIG.3

FIG.4.